# EUROPEAN PATENT APPLICATION

(11) **EP 1 275 884 A2**
(43) Date of publication of application: **15.01.2003**
(21) Application number: 02014320.2
(22) Date of filing: 27.06.2002
(51) Int. Cl.: F16H 57/04

(54) **Transmission seal and vent**

(30) Priority: 10.07.2001 US 902381
(71) Applicant: TECUMSEH PRODUCTS COMPANY, Tecumseh Michigan 49286 (US)
(72) Inventor: Johnson, Kevin L., Douglas, Georgia 31533 (US); Boyer, Scott G., Borden, Indiana 47106 (US)
(74) Representative: Dr. Weitzel & Partner

(57) **Abstract**

A transmission including an input (34), an output (26, 28), a housing (12) in which the input and output are operatively coupled and containing a quantity of fluid, and an outwardly flowing check valve (46) in fluid communication with the interior of the housing (12). The check valve (46) is biased into a closed position, and the transmission is substantially sealed when the check valve is in its closed position, whereby leakage of fluid from the transmission is prevented regardless of transmission orientation. The check valve (46) has an open position when the fluid in the housing is pressurized to a predetermined level, whereby the pressurized fluid may be vented from the transmission.

## Description

The present invention relates to transmissions, particularly those used in lawn and garden implements such as tractors, mowers and snow throwers.

Various types of transmissions or transaxles are commonly used in lawn and garden implements such as lawn mowers, lawn and garden tractors, snow throwers, and the like. Typically, these transmissions include an input such as a rotating shaft, which is coupled to the output shaft of an internal combustion engine, and an output, the input and the output being operatively coupled within the transmission housing. The output may be a rotating shaft or an axle.

The transmission input and output may be operatively coupled within the transmission housing in various ways. For example, in a manual shaft transmission of well-known type, the input and output are operatively coupled through a plurality of pairs of intermeshing gears, one of each pair selectively engaged with one of the input and the output. An example of such a manual shaft transmission is disclosed in U.S. Patent No. 5,183,138, the disclosure of which is expressly incorporated herein by reference.

Alternatively, the input and output may be operatively coupled within the transmission housing through a fluid, as in a hydrostatic transmission of well-known type having a variable displacement pump driven by the input and a fixed displacement motor which drives the output. Examples of such hydrostatic transmissions are disclosed in U.S. Patent No. 5,701,738 and in U.S. Patent Application Serial No. 09/498,692, filed February 7, 2000, the disclosures of which are expressly incorporated herein by reference.

Another type of transmission in which the input and output are operatively coupled through a fluid is disclosed in U.S. Patent No. 5,860,884, the disclosure of which is also expressly incorporated herein by reference. This transmission employs an epicyclic gear train having a sun gear driven by the input, and a planet gear carrier which drives the output. The degree of ring gear rotation permitted is controlled to vary the power transmission from the input to the output by configuring the ring gear as the impeller of a gerotor pump and controlling the rate at which fluid may flow through the pump with a valve: Maximum flow, which occurs when the impeller rotates at its highest rate, corresponds to no power being transferred from the input to the output and the planet gears rotate in place; minimum or zero flow, which occurs when the impeller rotates at its lowest rate, or not at all, corresponds to maximum power being transferred from the input to the output and the planet gears revolve about the sun gear, thereby rotating their carrier. Still other types of transmissions merely provide a fixed speed reduction between the input and output.

Regardless of transmission type, the housings of transmissions and transaxles typically include a quantity of oil for lubrication or fluid power purposes. During operation, as the oil warms, it and air located in the housing expand. Were the transmission housing not vented, the increased pressure of the air and oil may cause oil to leak past seals, and perhaps even damage them. It is thus usually necessary to vent the transmission, and allow the expanded fluids therein to escape the housing.

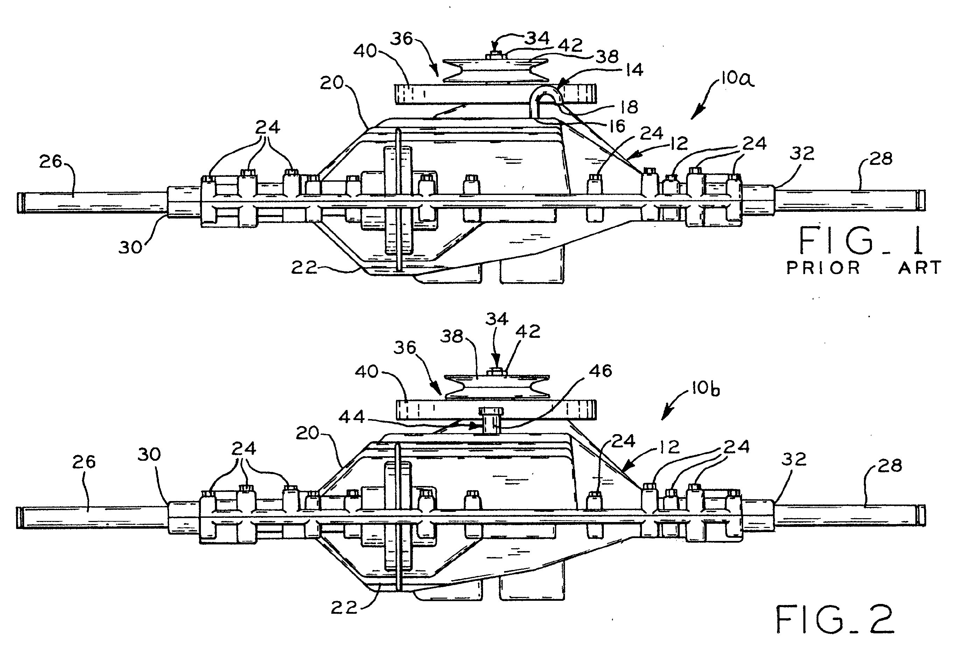

Figure 1 illustrates one previously-known way of venting the transmission housing. Transaxle 10a has housing 12 vented through inverted J-shaped tube 14, which places the interior of the housing in fluid communication with the atmosphere. During assembly and shipping of the transmission, the hole or aperture in which tube 14 is later installed is fitted with a plug (not shown) which substantially seals the transmission and prevents its oil charge from leaking out during transmission assembly, handling and shipping prior to being installed in an implement. During installation of transaxle 10 into a tractor, for instance, the plug is removed and end 16 of tube 14 is fitted into the aperture in the housing. Free end 18 of tube 14 faces downward to keep water and other contaminates from easily entering the housing.

A problem with this method of venting housing 12 is that, after installation of tube 14, the tractor may not be tilted or upended during its assembly and handling, for that may allow oil within transmission housing 12 to leak out of tube 14. Further, replacement of the plug with tube 14 requires an additional part (i.e., tube 14) and an additional process step. Moreover, any oil which is vented with air from housing 12 through tube 14 is lost, and is not returned to the interior of the housing.

Another previous means for venting a transmission housing is described in U.S. Patent No. 5,062,447 to Davison, Jr. et al., which discloses a plurality of valves combined into a breather control system to vent pressure within the transmission housing. The breather control system includes a manual pressure bleed valve, an outflowing pressure check valve to vent the transmission housing, and a vacuum check valve to relieve a vacuum within the housing. The breather control system allows venting of pressurized gas from within the transmission housing, however, does not prevent fluid leakage from the housing. Nevertheless, this breather control system is a complex device requiring several parts and, if incorporated, would significantly add to the cost of the implement. Further, any oil which is vented with air from this system may be lost, and not returned to the transmission.

A simple, inexpensive means for substantially sealing the transmission to prevent oil leakage therefrom before, during and after assembly of implement, which involves no secondary process steps, and which vents pressurized fluids from the transmission is desirable. It is also desirable that any oil which is vented with air from the transmission not be lost, and returned to the interior of the transmission housing.

The present invention provides a transmission housing with an outwardly flowing check valve mounted to the top of the housing to vent pressurized fluid therefrom and to prevent leakage of oil within the housing when the transmission, or an implement into which it is installed, is tilted or upended. The spring loaded ball type check valve opens under a light, predetermined threshold pressure within the housing which is great enough to overcome the biasing force of the spring. The force biasing the check valve into its closed position is sufficient to maintain the nonoperating transmission in a substantially sealed configuration regardless of the orientation of the transmission. Only when the threshold pressure is reached, which occurs only as a result of transmission operation, will the housing be vented. The threshold pressure may be in the range of approximately 2 to 5 psig.

The present invention provides a transmission including an input, an output, a housing in which the input and output are operatively coupled and containing a quantity of fluid, and an outwardly flowing check valve in fluid communication with the interior of the housing. The check valve is biased into a closed position, and the transmission is substantially sealed when the check valve is in its closed position, whereby leakage of fluid from the transmission is prevented regardless of transmission orientation. The check valve has an open position when the fluid in the housing is pressurized to a predetermined level, whereby the pressurized fluid may be vented from the transmission.

The present invention also provides a transmission including an input, an output, a housing in which the input and output are operatively coupled and containing a quantity of fluid, and means in fluid communication with the interior of the housing for substantially sealing the transmission when the fluid in the housing is below a threshold pressure, whereby leakage of fluid from the transmission is prevented regardless of transmission orientation, and venting the transmission when the fluid in the housing is above a threshold pressure.

The present invention further provides a transmission including an input, an output, a housing in which the input and output are operatively coupled and containing a quantity of oil and air, an oil container in fluid communication with the interior of the housing, and an outwardly flowing check valve in fluid communication with the interior of the housing through the container. The check valve is biased into a closed position, and the transmission is substantially sealed when the check valve is in its closed position, whereby leakage of oil from the transmission is prevented regardless of transmission orientation. The check valve has an open position when the fluid in the housing reaches a threshold pressure, and at least a portion of the air above the threshold pressure is vented from the transmission through the check valve.

An advantage provided by the present invention is that the check valve allows outward venting of the transmission housing during transmission operation when a predetermined threshold pressure in the housing is achieved, while preventing leakage from the transmission during shipping and handling of the transmission, regardless of its orientation.

An additional advantage provided by the present invention is that it is a simple, inexpensive means for alternatively venting air from the transmission housing and substantially sealing the transmission.

A further advantage provided by the present invention is that it eliminates the previous additional assembly step and inventorying associated with removing a plug and replacing it with a J-tube.

A still further advantage provided by some embodiments of the present invention is that oil vented with air from the transmission housing may be collected and returned to the interior of the housing.

The above-mentioned and other features and advantages of this invention, and the manner of attaining them, will become more apparent and the invention itself will be better understood by reference to the following description of embodiments of the invention taken in conjunction with the accompanying drawings, wherein:
Figure 1 is a rear view of an embodiment of a transmission in accordance with the prior art;
Figure 2 is a rear view of a first embodiment of a transmission in accordance with the present invention;
Figure 3 is an enlarged, fragmentary sectional view of the transmission of Figure 2;
Figure 4 is an enlarged, fragmentary sectional view of a second embodiment of a transmission in accordance with the present invention; and
Figure 5 is an enlarged, fragmentary sectional view of a third embodiment of a transmission in accordance with the present invention

Corresponding reference characters indicate corresponding parts throughout the several views. The exemplifications set out herein illustrate embodiments of the invention, in several forms, and such exemplifications are not to be construed as limiting the scope of the invention in any manner.

Figures 1-5 respectively show transaxles 10a-10e. Each of these transaxles may be a transmission of any type having an input and an output which are operatively coupled together within its housing. Transaxle 10a, discussed above, and further hereinbelow, and shown in Figure 1, is a transmission in accordance with the prior art; Transaxles 10b-10d, discussed below and shown in Figures 2-5, are transmissions in accordance with the present invention, and are each identical to transaxle 10a except as described hereinbelow.

Referring again to Figure 1, prior art transmission 10a includes housing 12 which comprises upper housing portion 20 and lower housing portion 22. The interface between upper and lower housing portions 20 and 22 lies in a substantially horizontal plane, being held together about the peripheries thereof by fasteners 24. Seals (not shown) are located between upper and lower housing portions 20 and 22, and about all shafts extending from housing 12.

Axles 26 and 28 serve as the output of the depicted transaxle, and respectively extend outwardly from ends 30 and 32 of housing 12, and are rotatably supported in transmission housing 12 by bearings (not shown). Notably, the output of a transmission in which the present invention may be incorporated may consist of a single shaft.

Input shaft 34 extends downwardly into transmission housing 12, and is rotatably supported in housing 12 by a bearing (not shown). Input shaft 34, which serves as the input of the depicted transaxle, is approximately perpendicular to axles 26 and 28 and may be rotatably coupled to the output shaft of an internal combustion engine (not shown) through pulley and fan assembly 36, which comprises pulley 38 and fan 40 which are rotatably fixed to input shaft 34.

Transmission housing 12 contains a quantity of oil which lubricates the transmission components and, in some types of transmissions, serves to operatively couple the input and output. Transmission housing 12 also contains a quantity of air generally located above the surface level of the oil, the oil and air comprising the generally nonhomogeneous fluid which expands by being heated during transmission operation.

Generally, the oil level in the transmission is such that it will not be vented as a liquid from the transmission housing; in cases of overfilling the housing with oil it may, however, be desirable that this excess oil be allowed to be vented from the housing to avoid oil leakage across seals or damage to them. Rather, the expanding air which is vented from the housing may normally carry droplets of oil which are irrecoverably expelled from transaxle 10a through tube 14; transaxle 10a provides no means for capturing this normally vented oil droplets and returning them to the interior of housing 12. This oil is instead undesirably leaked onto the exterior surface of the transmission, other surfaces of the tractor, or onto the ground.

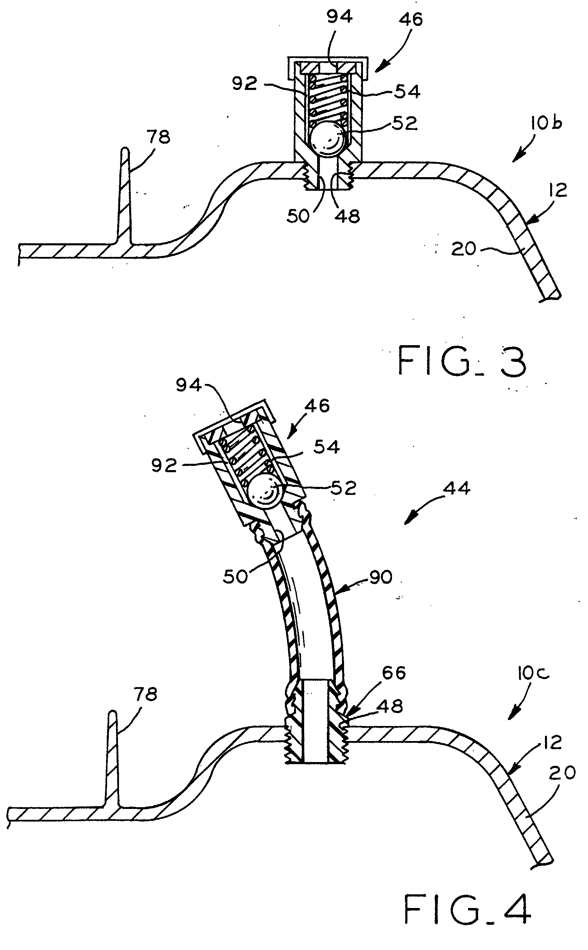

Referring to Figures 2 and 3, in order to vent a portion of the expanding, pressurized fluid from transaxle 10b during its operation, housing 12 is provided with a first embodiment of the inventive means for sealing the transmission and venting its housing. Sealing and venting system 44 of transaxle 10b provides outflowing pop off or check valve 46 mounted directly into hole or aperture 48 in upper housing portion 20, in which hole the shipping plug and tube 14 of the prior art would otherwise have been previously installed. Valve 46 is thus in fluid communication with the interior of housing 12. The space inside housing 12 near aperture 48 may be located well above the surface level of the oil, and thus would normally include only air, or air with droplets of oil in it.

Valve 46 comprises ball 52 biased into a closed position by spring 54, and is seated over inlet port 50. Valve 46 opens in response to a light, predetermined threshold pressure being reached inside housing 12. The amount of pressure required to open valve 46 may be in the range of 2 to 5 psig, for example. As transmission 10b operates, and the oil and air located in housing 12 heats up, and as this nonhomogeneous fluid expands, and the pressure within housing 12 increases. When the pressure of the fluid in housing 12 reaches a predetermined threshold level, ball 52 is moved from its seated position, compressing spring 54, and opening inlet port 50. The pressurized fluid is then allowed to pass through inlet port 50 into valve chamber 92 which houses ball 52 and spring 54. Chamber 92 is sized so that when ball 52 unseated, the venting fluid may pass around ball 52 and exit check valve 46 through discharge port 94. The discharged fluid is expelled into the atmosphere.

The threshold pressure range of 2 to 5 psig of valve 46 is low enough to allow the expanding fluid to be vented from the transmission housing without risking oil leakage past, or damage to, the seals, and is high enough to ensure that transaxle 10b will remain sealed during its assembly and shipping, regardless of its orientation. Valve 46 may thus be installed at the transmission manufacturer in lieu of the shipping plug, and need not be replaced with a vent tube such as tube 14 (Figure 1) after installation of the transmission in the implement. Check valve 46 is a conventional valve which may be purchased from Lincoln Industries, One Lincoln Way, St. Louis, Missouri 63120-1578.

Referring to Figure 4, a second embodiment of the inventive means for sealing the transmission and venting its housing is shown. Sealing and venting system 44 of transaxle 10c includes upwardly extending hose 90 approximately 2 to 5 inches long having one end thereof connected to fluid connector 66, which is engaged with aperture 48 of housing 12, and the other end fitted with check valve 46. Any droplets of oil contained in the air being vented from housing 12 comes in contact with the interior surface of hose 90 and clings thereto, and is thereby separated from the air, which is expelled through valve 46. The oil collected on the interior surface of hose 90, which is in continuous fluid communication with the interior of housing 12, flows downwardly under the influence of gravity and returns to the interior of housing 12 through fluid connector 66.

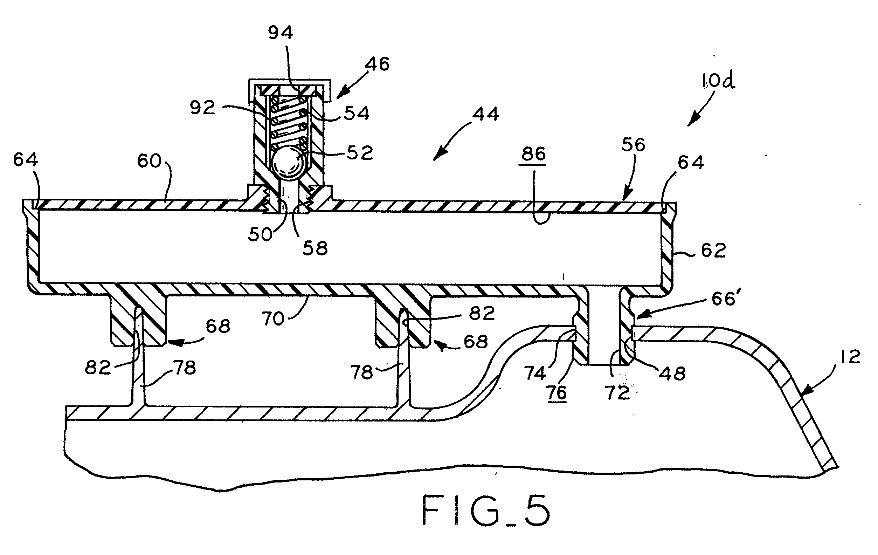

Referring to Figure 5, a third embodiment of the inventive means for sealing the transmission and venting its housing is shown. Sealing and venting system 44 of transaxle 10d includes oil container 56 mounted to the exterior surface of housing 12. Container 56 has aperture 58 located in upper wall 60 thereof, into which outflowing check valve 46 is threadedly engaged. Container 56 may be of two-piece construction, comprising injection-molded plastic upper and lower portions 60, 62 which are fixedly attached to one another by means of, for example, adhesive, interference fitting, spin welding or vibration welding. Container lower portion 62 includes ledge 64 on which the periphery of container upper portion 60 rests.

Container 56 includes fluid connector 66' and a pair of connecting members 68 integrally formed with its lower portion 62 and extending downwardly from lower wall 70 thereof. Fluid connector 66' has fluid flow passage 72 therethrough which places the interior of container 56 in continuous fluid communication with the interior of housing 12. Fluid connector 66' has annular groove 74 formed in outer surface 76 thereof, and is removably received in aperture 48 provided in housing 12. Connector 66' may be press fitted into aperture 48 until the perimeter of the aperture is captured in groove 74. Integrally formed in the exterior of housing 12 are upwardly extending fins 78 are received in slots 82 formed in each connecting member 68. Container 56 is retained on the exterior of housing 12 by the interference fit between slots 82 and fins 78.

Any droplets of oil carried by the air being vented through container 56 is collected in the container and flows under the influence of gravity back into the interior of housing 12 through connector 66. Notably, as shown in Figure 5, connector 66' and valve 46 are in fluid misalignment due to their lateral misalignment, and the fluid being discharged into container 56 impinges on upper interior surface 86 of the container, and droplets of oil in this fluid will cling thereto and be separated from the air which may more freely flow towards valve inlet port 50.

## Claims

1. A transmission, comprising an input (34); an output (26, 28); and a housing (12), said input and said output operatively coupled within said housing, said housing containing a quantity of fluid; and **characterized by**:
an outwardly flowing check valve (46) in fluid communication with the interior of said housing (12), said check valve biased into a closed position, said transmission being substantially sealed when said check valve (46) is in its said closed position, whereby leakage of fluid from said transmission is prevented regardless of transmission orientation, said check valve being in an open position when the fluid in said housing is pressurized to a predetermined level, whereby the pressurized fluid may be vented from said transmission.

2. The transmission of claim 1, **characterized in that** said check valve (46) is moved from its said closed position to said open position when the fluid in said housing (12) has reached a pressure level in the range of approximately 2 to 5 psig.

3. The transmission of claim 1, **characterized by** an oil container (56) in fluid communication with the interior of said housing (12), said check valve (46) being in fluid communication with the interior of said housing through said container (56).

4. The transmission of claim 3, **characterized in that** said container (56) is directly mounted to an exterior surface of said housing (12).

5. The transmission of claim 3, **characterized in that** said oil container (56) is in fluid communication with the interior of said housing (12) through a fluid connection (66) located in a lower portion (62) of said container, and said check valve is connected to an upper portion (60) of said container;

6. The transmission of claim 3, **characterized in that** fluid entering said container (56) from said housing (12) through said fluid connection (66) impinges on an interior surface (86) of said container at a location remote from said check valve (46), whereby oil contained in the fluid entering said container is deposited on the interior surface of said container and is separated from air contained in the fluid entering said container.

7. The transmission of claim 6, **characterized in that** oil collected in said container (56) is drained under the influence of gravity through said fluid connection (66) back into said housing (12).

8. The transmission of claim 2, further comprising a hose (90) in fluid communication with the interior of said housing (12), said hose extending upwardly from said housing, said check valve (46) being in fluid communication with the interior of said housing through said hose (90).

9. The transmission of claim 1, **characterized in that** said fluid includes air and oil.
